# EUROPÄISCHE PATENTSCHRIFT

(11) **EP 4 533 173 B1**
(45) Veröffentlichungstag und Bekanntmachung des Hinweises auf die Patenterteilung: **21.10.2026**
(21) Anmeldenummer: 23730459.7
(22) Anmeldetag: 01.06.2023
(51) Int. Cl.: G02F 1/017

(54) **EINZELPHOTONENQUELLE, WAFER UND VERFAHREN ZUR HERSTELLUNG EINER EINZELPHOTONENQUELLE**
SINGLE PHOTON SOURCE, WAFER AND METHOD FOR PRODUCING A SINGLE PHOTON SOURCE
SOURCE DE PHOTONS UNIQUES, PLAQUETTE ET PROCÉDÉ DE FABRICATION D'UNE SOURCE DE PHOTONS UNIQUES

(30) Priorität: 02.06.2022 DE 102022114031; 21.06.2022 DE 102022115431
(43) Veröffentlichungstag der Anmeldung: 09.04.2025
(73) Patentinhaber: AMO GmbH, 52074 Aachen (DE)
(72) Erfinder: SUCKOW, Stephan, 52078 Aachen (DE); CEGIELSKI, Piotr, 81379 München (DE)
(74) Vertreter: Patentanwälte Bauer Vorberg Kayser
(86) Internationale Anmeldenummer: PCT/EP2023/064711
(87) Internationale Veröffentlichungsnummer: WO 2023/232950

(56) Entgegenhaltungen:
- WO-A1-2021/219856
- JP-B2- 6 160 995
- US-A1- 2013 256 504
- US-B1- 6 710 366
- US-B2- 9 513 436

## Beschreibung

Die vorliegende Erfindung betrifft eine Einzelphotonenquelle, einen Wafer aufweisend eine Mehrzahl von Einzelphotonenquellen und ein Verfahren zur Herstellung einer Einzelphotonenquelle.

Einzelphotonenquellen sind das Schlüsselelement, das für Quantenprozessoren benötigt wird. Auch in der Quantentelekommunikation und Quantenkryptographie sind Einzelphotonenquellen eine notwendige Voraussetzung. Quantenprozessoren besitzen dabei gegenüber herkömmlichen Prozessoren für bestimmte Algorithmen entscheidende Vorteile in Bezug auf die zur Verfügung gestellte Rechenleistung.

Einzelne Photonen können generell durch optisches Pumpen generiert werden, beispielsweise mittels eines Lasers, der einen nachgelagerten Lumineszenzprozess anregt. Allerdings ist das Licht der Anregungsquelle, hier des Lasers, nur schwer aus dem von der angeregten Photonenquelle emittierten Lumineszenzlicht herausfilterbar. Eine ungenügende Filterung führt allerdings dazu, dass das Licht der Anregungsquelle die von der Photonenquelle emittierten Einzelphotonen überlagert und bezüglich des resultierenden Spektrums dominierend ist. So werden kontrollierte Prozesse, die einzelne Photonen erfordern, verhindert. Zusätzlich ist bei der Verwendung von optischen Pumpverfahren eine Skalierung im Sinne einer gleichzeitigen Nutzbarkeit einer Vielzahl von Einzelphotonenquellen nur schwer oder unzureichend möglich. Ferner verursachen die den optischen Pumpverfahren zugrundeliegenden Laser hohe Kosten. Durch die Laser und die zugrundeliegenden optischen Komponenten wird auch eine Miniaturisierung verhindert.

Ein anderer Ansatz betrifft Einzelphotonenquellen, die durch elektrische Felder angeregt werden. Dazu werden beispielsweise epitaktisch gezüchtete Quantenpunkte elektrischen Feldern ausgesetzt und derart angeregt, dass sie einzelne Photonen emittieren. Epitaktisch gezüchtete Quantenpunkte sind allerdings schlecht geeignet, um in Wellenleiter integriert zu werden, die zur verlustarmen Führung der Einzelphotonen genutzt werden. Insbesondere sind derartige Einzelphotonenquellen ungeeignet, um in Si (Silizium) oder SiN (Siliziumnitrid)-basierte Wellenleiter integriert zu werden. Das bedeutet, dass die epitaktisch gezüchteten Quantenpunkte separat vom Wellenleiter angeordnet sein müssen und eine verlustarme Führung der erzeugten einzelnen Photonen mittels des Wellenleiters zunächst eine Kopplung der Photonen in den Wellenleiter erfordert. Dies führt zu Kopplungsverlusten, sodass die Quantenausbeute vermindert ist. Dadurch wird eine Skalierbarkeit im Sinne einer gleichzeitigen Nutzbarkeit einer Vielzahl von Einzelphotonenquellen ebenfalls verhindert. Zusätzlich erfordern Quantenpunkte, die epitaktisch gewachsen sind, komplexe Herstellungsprozesse, die zeitintensiv, kostenintensiv und zudem äußerst sensitiv auf äußere Einflüsse sind. Beispielsweise ist die Vermeidung von Fehlstellen oder Verunreinigungen bei derartigen epitaktischen Verfahren äußerst aufwendig.

Lin et al. (Nature Commun, Vol. 8, p. 1132, 2017) offenbaren die unmittelbare Integration einer Einzelphotonenquelle in einen Wellenleiter. Dazu wird in den Wellenleiter ein Loch geätzt und darin ein Quantenpunkt angeordnet. Um den Quantenpunkt zur Emission von Einzelphotonen anzuregen, werden gemäß diesem Ansatz optische Anregungsverfahren (optisches Pumpverfahren) genutzt, beispielsweise eine Laserquelle. Allerdings führt auch dieser Ansatz nicht zu wirtschaftlich nutzbaren Einzelphotonenquellen, da die Quantenausbeute wegen des optischen Pumpverfahrens gering ist. Zusätzlich wird auch die Skalierbarkeit im Sinne einer gleichzeitigen Nutzbarkeit einer Vielzahl von Einzelphotonenquellen verhindert. Zudem sind die nachgelagerten bereits skizzierten Filterungsprozesse notwendig, aufwendig und vermindern ebenfalls die Quantenausbeute.

Kaminskaya et al. (Nature Photonics, Band 10, Seiten 727 - 732, 2016) offenbart die Nutzung von einwandigen Kohlenstoffnanoröhren, um die Einzelphotonenquelle in einem Silizium Wellenleiter zu integrieren. Allerdings führt auch dies zu einer für wirtschaftliche Zwecke inakzeptablen Quantenausbeute (< 1%).

Aus US 2013/0256504 A1 und US 9 513 436 B2 ist eine Photonenquelle mit epitaktisch gewachsenen Quantenpunkten bekannt.

Aus US,6,710,366 B1 ist ein Nanokompositmaterial mit einer Matrix und darin angeordneten Quantenpunkten bekannt.

WO 2021/219856 A1 betrifft zwar ein Bauteil mit Quantenpunkten, aber keine Einzelphotonenquelle.

Aus JP 6 160995 B2 ist eine optisch gepumpte Photonenquelle bekannt.

Es besteht daher ein Bedürfnis, eine Einzelphotonenquelle und ein entsprechendes Herstellungsverfahren bereitzustellen, mittels denen die Nachteile bekannter Ansätze ausgeräumt oder zumindest verringert werden können. Insbesondere ist es wünschenswert, die Quantenausbeute zu verbessern und eine wirtschaftliche Skalierbarkeit im Sinne einer Massenproduktion (großtechnische Herstellungsverfahren) zu ermöglichen. Zudem ist es wünschenswert, dass die Einzelphotonenquelle mit einem geringen Herstellungsaufwand verbunden ist.

Die Aufgabe wird durch die Gegenstände der unabhängigen Patentansprüche gelöst. Vorteilhafte Ausgestaltungen sind in den abhängigen Patentansprüchen und der nachfolgenden Beschreibung angegeben, von denen jeder für sich oder in (Sub-)Kombination Aspekte der Offenbarung darstellen kann. Einige Aspekte werden im Hinblick auf Vorrichtungen und andere im Hinblick auf Verfahren erläutert. Die Merkmale sind aber wechselseitig zu übertragen.

Gemäß einem Aspekt wird eine Einzelphotonenquelle bereitgestellt. Die Einzelphotonenquelle umfasst zumindest einen Wellenleiterabschnitt, einen aus einer Lösung abgeschiedenen Quantenpunkt, eine erste Elektrode und eine zweite Elektrode. Der Wellenleiterabschnitt weist ein Loch auf, in dem der Quantenpunkt innerhalb des Wellenleiterabschnitts integriert ist. Die erste Elektrode und die zweite Elektrode sind auf gegenüberliegenden Seiten des Quantenpunkts angeordnet und eingerichtet, den Quantenpunkt elektrisch zu kontaktieren. Dadurch wird vorteilhaft ein direkt in einen Wellenleiterabschnitt integrierter Quantenpunkt bereitgestellt. Somit können die Einzelphotonen direkt in den Wellenleiterabschnitt emittiert werden und es können Einkoppelverluste vermieden werden, die auftreten würden, wenn die Quelle außerhalb des Wellenleiterabschnitts angeordnet wäre. Zudem kann vorteilhaft auf ein optisches Anregungsverfahren verzichtet werden. Dadurch ist die Einzelphotonenerzeugung vorteilhaft besonders effizient skalierbar. Zudem wird vermieden, dass komplexe Filtermechanismen vorgesehen sein müssen, um das Anregungslicht aus dem Emissionsspektrum herauszufiltern. Die Quantenausbeute ist gegenüber bekannten Einzelphotonenquellen vorteilhaft erhöht.

Bevorzugt umfasst die erste Elektrode zumindest ein erstes Material derart, dass sie als Elektroneninjektionsschicht eingerichtet ist. Alternativ kann die erste Elektrode eine Elektroneninjektionsschicht umfassen, die Elektroneninjektionsschicht kann also als zur ersten Elektrode zugehörig angesehen werden.

Optional weist der Wellenleiterabschnitt ein zweites Material auf, das derart eingerichtet ist, dass eine Ausbreitung elektromagnetischer Wellen und eingekoppelter Einzelphotonen ermöglicht wird.

Alternativ oder kumulativ umfasst die zweite Elektrode zumindest ein drittes Material derart, dass sie als Lochinjektionsschicht eingerichtet ist. Alternativ kann die zweite Elektrode eine Lochinjektionsschicht umfassen, die Lochinjektionsschicht kann also als zur zweiten Elektrode zugehörig angesehen werden.

Dadurch kann der Quantenpunkt bedarfsgerecht mit maßgeschneiderten elektrischen Potentialen kontaktiert werden, um die Quantenausbeute, d.h. die Anzahl (manchmal auch als Intensität oder Amplitude beschrieben) der emittierten Einzelphotonen zu optimieren. Da die Emission von den an den Quantenpunkt angelegten elektrischen Feldern abhängig ist, kann deshalb die Einzelphotonenquelle im Hinblick auf ihre Ausbeute optimiert werden.

Die Elektroden können insbesondere Kontaktflächen aufweisen, mittels derer sie durch eine oder mehrere externe Spannungsquellen gesteuert und insbesondere beaufschlagt werden, um entsprechende elektrische Potentiale einzustellen. Die angelegten Potentiale beeinflussen dabei die Menge an mittels der Elektronen- und Lochinjektionsschicht injizierten Elektronen oder Löcher.

Bevorzugt ist das Loch innerhalb des Wellenleiterabschnitts derart angeordnet, dass es im Wesentlichen mit einem Maximum zumindest einer elektromagnetischen Schwingungsmode, d.h. der elektromagnetischen Feldverteilung des im Wellenleiterabschnitt geführten Lichts, übereinstimmt. Die elektromagnetische Feldverteilung kann insbesondere als eine Schwingungsmode (Wellenleitermode) innerhalb des Wellenleiters entlang derjenigen Richtung angesehen werden, die senkrecht zur Ausbreitungsrichtung der elektromagnetischen Feldverteilung orientiert ist. Die Ausbreitungsrichtung stimmt dabei mit der Längserstreckungsrichtung des Wellenleiters überein. Um die Einkopplung der emittierten Einzelphotonen in die jeweilige Schwingungsmode zu optimieren, ist das Loch deshalb innerhalb des Wellenleiterabschnitts derart angeordnet, dass es mit der Position eines Maximums der elektromagnetischen Feldverteilung der entsprechenden Schwingungsmode zusammenfällt. Die Kopplung ist dann optimiert, d.h. maximiert. So wird eine besonders effiziente Einkopplung der emittierten Einzelphotonen in die jeweilige Schwingungsmode bereitgestellt. Wenn die Führungsrichtung der Einzelphotonen also der Längserstreckungsachse des Wellenleiterabschnitts entspricht, so ist das Loch entlang zumindest einer Querstreckungsrichtung des Wellenleiterabschnitts entsprechend dem Maximum der gewünschten Wellenleitermode (Schwingungsmode) angeordnet.

Um die Kopplung weiter zu optimieren ist der Quantenpunkt eingerichtet, Einzelphotonen einer spezifischen Wellenlänge zu emittieren und ist der Wellenleiterabschnitt derart ausgebildet, dass eine von der Einzelphotonenquelle emittierte elektromagnetische Feldverteilung der emittierten Einzelphotonen mit dem Feld der (gewünschten) Wellenleitermode überlappt. Die Wellenlänge der emittierten Einzelphotonen hängt dabei vom verwendeten Quantenpunkt und dem angelegten elektrischen Potential ab. Zusätzlich kann dann das Loch im Wellenleiterabschnitt derart angeordnet sein, dass es mit einem Maximum der Grundmode (Mode nullter Ordnung) zusammenfällt. Als Folge ist die Kopplung zwischen dem Quantenpunkt und dem Wellenleiter optimiert und eine möglichst verlustarme Führung wird gewährleistet.

Besonders bevorzugt handelt es sich bei dem Wellenleiter um einen "Einzelmoden-Wellenleiter", also um einen Wellenleiter, der insbesondere dazu ausgelegt und eingerichtet ist, die Ausbreitung von Wellen einer einzelnen Schwingungsmode zu ermöglichen, beispielsweise der Grundmode.

Besonders vorteilhaft ist das Loch innerhalb des Wellenleiterabschnitts derart angeordnet, dass es im Wesentlichen mit dem Maximum der Grundmode (Grundfrequenz) oder erster Ordnung (erste Oberschwingung) übereinstimmt. Für die Einkopplung in die Grundmode ist die Kopplung optimiert. Die Nutzung von Moden höherer Ordnung (Oberschwingungen) geht dabei in der Regel mit einer verringerten Kopplung und damit einer verringerten Quantenausbeute einher, kann aber für besondere Anwendungsfälle von Vorteil sein. Insofern kann das Loch auch derart angeordnet sein, dass es mit einem Maximum einer höheren Ordnung, d.h. einer vorbestimmten Oberwelle zusammenfällt.

Optional kann die erste Elektrode und/oder die zweite Elektrode insbesondere Al (Aluminium), Ni (Nickel), Ti (Titan), AG (Silber) oder Ca (Calcium) oder eine Kombination davon umfassen. Es werden also Metallelektroden bereitgestellt. Die erste Elektrode und/oder die zweite Elektrode können bevorzugt mittels eines Sputterprozesses oder eines Verdampfungsverfahrens aufgebracht werden. Die erste und/oder die zweite Elektrode kann/können jeweils strukturiert sein, um gewünschte Abmessungen aufzuweisen. Die Strukturierung kann mittels Lithographie erfolgen.

Ferner kann das erste Material insbesondere TiO₂ (Titanoxid), ZnO (Zinkoxid) oder TPBi (2,2',2"-(1,3,5-Benzinetriyl)-tris(1-phenyl-1-H-benzimidazole)) umfassen. Das erste Material kann mittels eines Sputterprozesses, eines Verdampfungsprozesses, eines Atomlagenabscheideverfahrens oder eines Rotationsbeschichtungsverfahrens aufgebracht werden. Die Strukturierung kann mittels Lithographie erfolgen. Dadurch können besonders effiziente Elektroneninjektionsschichten präpariert werden.

Optional kann das dritte Material NiO (Nickeloxid) oder PTAA (poly(triaryl)amine) umfassen. Das dritte Material kann mittels eines Sputterprozesses, eines Verdampfungsprozesses, eines Rotationsbeschichtungsverfahrens oder mittels Atomlagenabscheidung aufgebracht werden. Die Strukturierung kann mittels Lithographie erfolgen. Dadurch können besonders effiziente Lochinjektionsschichten präpariert werden.

Optional umfasst der Wellenleiterabschnitt SiₓN_{y} (Siliziumnitrid), Ta₂O₅ (Tantaloxid), TiO₂ (Titanoxid), AlN (Alumiuniumnitrid) oder ein abweichendes dielektrisches Material, das als das zweite Material des Wellenleiterabschnitts fungiert. Insbesondere kann das zweite Material des Wellenleiterabschnitts derart gewählt werden, dass an der Grenzfläche ein hoher Reflexionskoeffizient (Verhältnis der Amplituden der reflektierten zur einfallenden Welle) auftritt. Bevorzugt kann das Material des Wellenleiterabschnitts auch einen hohen Brechungsindex aufweisen, wodurch ebenfalls ein hoher Reflexionsgrad gewährleistet wird. Dabei ist die Auslegung des Wellenleiterabschnitts bezüglich des Materials und seiner Abmessungen auf die Wellenlänge der von dem Quantenpunkt emittierten Einzelphotonen abgestimmt.

Bevorzugt umfasst der Quantenpunkt einen CdSeTe (Cadmiumselentelurid) Kern mit einer ZnS (Zinksulfid) Hülle. Derartige Quantenpunkte können besonders effizient aus einer Lösung abgeschieden werden. Dennoch sind sie sehr robust und lassen sich homogen herstellen.

Bevorzugt ist ein Radius des Lochs, welcher größer oder gleich 5 nm und kleiner oder gleich 75 nm beträgt, weiter bevorzugt größer oder gleich 7 nm und kleiner oder gleich 30 nm, besonders bevorzugt größer oder gleich 10 nm und kleiner oder gleich 20 nm. Der Radius des Lochs hat einerseits Einfluss auf die Anzahl der aufgenommenen Quantenpunkte und andererseits Einfluss auf die Kopplung zwischen den emittierten Einzelphotonen und dem Wellenleiterabschnitt bzw. der sich darin ausbreitenden elektromagnetischen Welle. Offensichtlich ist vorliegend gewünscht, dass je Loch nur ein Quantenpunkt in dem jeweiligen Loch angeordnet ist. Die Positionierung erfolgt durch Abscheidung. Üblicherweise wird der Abscheidungsvorgang mehrfach wiederholt. Die genannten Radien gewährleisten, dass eine hohe Wahrscheinlichkeit dafür erzielt wird, dass je Loch ein einzelner Quantenpunkt abgeschieden wird. Zudem gewährleisten die genannten Radien eine optimierte Kopplung des Quantenpunkts mit dem Wellenleiterabschnitt bzw. der entsprechenden elektromagnetischen Mode.

In einigen Ausführungsformen können, beispielsweise aus fertigungstechnischen Gründen, je Loch allerdings auch mehrere Quantenpunkte angeordnet sein. Typischerweise führt dies dazu, dass für die Mehrzahl an in einem Loch angeordneten Quantenpunkte einer der Quantenpunkte am stärksten emittiert und deshalb bezüglich der jeweiligen Mehrzahl an Quantenpunkten dominiert. Daher kann die Annahme begründet sein, dass trotz der Anordnung mehrerer Quantenpunkte in dem jeweiligen Loch, diese als einzelner Quantenpunkt behandelt werden.

In einer bevorzugten Ausführungsform sind der Wellenleiterabschnitt, die erste Elektrode und die zweite Elektrode auf einem Trägersubstrat angeordnet. Dabei weist der Wellenleiterabschnitt eine Höhe vom Trägersubstrat ausgehend auf. Eine Lochtiefe des Lochs ausgehend von einer Oberseite des Wellenleiterabschnitts (gegenüberliegend zum Trägersubstrat) bemessen relativ zur Unterseite des Wellenleiterabschnitts beträgt dann zumindest 50% der Höhe des Wellenleiterabschnitts, bevorzugt zumindest 70%, weiter bevorzugt zumindest 85%, weiter bevorzugt zumindest 90% und bis zu 100%.

Insbesondere im Falle elektrisch angeregter Einzelphotonenquellen sollte das Loch die gesamte Wellenleiterhöhe überspannen, also die Lochtiefe 100% betragen. Dadurch wird gewährleistet, dass der Kontakt zur Elektrode, die auf der gegenüberliegenden Seite des Wellenleiters angeordnet ist, besonders gut ist, was sich vorteilhaft auf den elektrischen Anregungsprozess auswirkt. Für bestimmte Anwendungsfälle kann das Loch auch vor der Positionierung der Einzelphotonenquelle zumindest teilweise mit Elektrodenmaterial gefüllt werden, um es flacher zu machen. Die jeweilige Elektrode umfasst dann einen in das Loch hineinragenden Abschnitt. Dennoch wird dadurch ein guter Kontakt zur jeweiligen Elektrode gewährleistet. Beispielsweise kann die Höhe des Wellenleiterabschnitts im Wesentlichen 100 nm betragen. Die Lochtiefe, ausgehend von der dem Trägersubstrat gegenüberliegenden Seite des Wellenleiterabschnitts, beträgt dann zumindest 50 nm, bevorzugt 80 nm oder mehr, weiter bevorzugt 90 nm oder mehr, und insbesondere bis zu 100 nm. Neben der optimierten Anregung der Einzelphotonenquelle hat die Lochtiefe relativ zur Höhe des Wellenleiterabschnitts zusätzlich Einfluss auf die Kopplung des Quantenpunkts mit der elektromagnetischen Mode des Wellenleiters. Die Lochtiefe von 100% ermöglicht eine besonders hohe Kopplung und damit eine besonders effiziente Einkopplung bezüglich der emittierten Einzelphotonen und gleichzeitig optimierte elektrische Anregungsmechanismen.

Optional kann das Trägersubstrat Siliziumoxid umfassen, beispielsweise Siliziumoxid auf Silizium.

Gemäß einem weiteren Aspekt wird ein Wafer aufweisend eine Mehrzahl von Einzelphotonenquellen wie zuvor beschrieben bereitgestellt. Die hier beschriebene Einzelphotonenquelle lässt sich durch die Vermeidung optischer Anregungsverfahren und die stattdessen implementierte Nutzung von elektrischen Anregungsprozessen für die Massenproduktion (großtechnische Herstellungsverfahren) skalieren. Deshalb kann ein Wafer, beispielsweise ein Siliziumwafer genutzt werden, um eine Vielzahl entsprechender Einzelphotonenquellen auf einem einzigen Wafer zu realisieren. Dadurch ist die Einzelphotonenquelle für viele wirtschaftliche Anwendungen vorbereitet. Insbesondere müssen auch herkömmliche Wafer-Beschichtungstechniken nicht aufwendig angepasst werden. Die entsprechenden als Elektroden wirkenden Schichten können einfach und effizient in bekannter Weise zur Kontrolle der jeweiligen Quantenpunkte kontaktiert werden.

Gemäß einem weiteren Aspekt wird auch ein Verfahren zur Herstellung einer Einzelphotonenquelle bereitgestellt. Das Verfahren umfasst zumindest die Schritte:

| | |
|---|---|
| S1 | Abscheiden eines ersten Materials zur Ausbildung einer ersten Schicht auf einem Trägersubstrat, |
| S2 | Strukturieren der ersten Schicht auf einem Trägersubstrat, |
| S3 | Abscheiden eines zweiten Materials zur Ausbildung eines Wellenleiterabschnitts zumindest teilweise auf der ersten Schicht, |
| S4 | Ätzen zumindest eines Lochs in den Wellenleiterabschnitt unter Verwendung einer Lochmaske, |
| S5 | Abscheiden zumindest eines Quantenpunkts aus einer Lösung unter Verwendung einer Lackmaske in das Loch des Wellenleiterabschnitts, wobei die Lackmaske bezüglich des Wellenleiterabschnitts derart angeordnet ist, dass zumindest ein Loch in der Lackmaske mit dem Loch in dem Wellenleiterabschnitt übereinstimmt, |
| S6 | Entfernen der Lackmaske, und |
| S7 | Abscheiden zumindest eines dritten Materials zur Ausbildung einer zweiten Schicht zumindest teilweise auf dem Wellenleiterabschnitt, |

wobei die erste Schicht als erste Elektrode und die zweite Schicht als zweite Elektrode zur Kontaktierung des Quantenpunkts eingerichtet ist.

Die erste Schicht, das zweite Material und die zweite Schicht können beispielsweise durch herkömmliche Epitaxieverfahren, Sputterprozesse, chemische Gasphasenabscheidung, plasmaunterstützte chemische Gasphasenabscheidung, physikalische Gasphasenabscheidung oder Atomlagenabscheidung aufgebracht werden. Optional können Lithographieprozesse genutzt werden, um Abmessungen entsprechender Komponenten, beispielsweise der Elektroden bedarfsgerecht zu strukturieren. Die Lackmaske kann beispielsweise einen Fotolack umfassen, mittels entsprechender Beleuchtung belichtet und in der Entwicklung selektiv entfernt werden. Die Lackmaske kann auch einen Lack umfassen, der für Elektronenstrahllithographie geeignet ist.

Die Einzelphotonenquelle kann somit vorteilhaft mittels üblicher Techniken hergestellt werden. Es ergibt sich deshalb ein vergleichsweise geringer Herstellungsaufwand. Bestehende Produktionsanlagen müssen nicht aufwendig angepasst werden.

Optional können die Schritte S1 und S2 auch gemeinsam verwirklicht werden, wenn eine entsprechende Maske genutzt wird, so dass die Abscheidung des ersten Materials gleich derart erfolgt, dass die erste Schicht entsprechend der gewünschten Positionierung und Abmessungen ausgebildet wird.

Optional kann die Lochmaske auch mit der Lackmaske übereinstimmen. Es kann also vorgesehen sein, dass lediglich eine einzelne Maske genutzt wird, um sowohl das zumindest eine Loch bedarfsgerecht zu ätzen, als auch um die erste und zweite Schicht bedarfsgerecht zu strukturieren.

Bevorzugt sind die Quantenpunkte in Decan gelöst. Besonders bevorzugt umfassen die Quantenpunkte einen CdSeTe (Cadmiumselentelurid) Kern mit einer ZnS (Zinksulfid) Hülle. Eine Decan-basierte Lösung lässt sich verhältnismäßig einfach verarbeiten.

Die teilweise Überlappung der Elektroden und des Wellenleiterabschnitts bezieht sich auf eine Draufsicht, entsprechend der die jeweiligen Komponenten zumindest teilweise räumlich überlappende Bereiche einnehmen. Beispielsweise können die Elektroden den Wellenleiterabschnitt zumindest teilweise entlang der Quererstreckungsachse des Wellenleiterabschnitts überlappen. Andere Geometrien sind aber ebenfalls denkbar. Entscheidend ist lediglich, dass der Quantenpunkt durch die Elektroden aus gegenüberliegenden Richtungen kontaktiert werden kann, sodass ein elektrisches Feld bedarfsgerecht eingestellt werden kann.

Optional kann insbesondere in Schritt S3 ein Sputterprozess, chemische Gasphasenabscheidung, plasmaunterstützte chemische Gasphasenabscheidung, physikalische Gasphasenabscheidung oder Atomlagenabscheidung verwendet werden.

In einer besonderen Ausführungsform wird als Trägersubstrat ein Wafermaterial genutzt und werden eine Vielzahl an integrierten Einzelphotonenquellen auf dem Wafermaterial in separaten Einheiten ausgebildet. Dabei stimmen die Abmessungen der Lackmaske in Schritt S5 im Wesentlichen mit Abmessungen des Wafers überein. Zudem wird Schritt S5 mehrfach wiederholt. Die Abscheidung der Quantenpunkte aus der Lösung in die Löcher erfolgt statistisch. Das bedeutet, dass beim erstmaligen Abscheidungsvorgang nur eine Teilanzahl an bereitgestellten Löchern der jeweiligen Einzelphotonenquellen mit einem Quantenpunkt "befüllt" werden. Die Wiederholung des Abscheidevorgangs entsprechend Schritt S5 führt dazu, dass sich diese Teilanzahl erhöht. Bevorzugt kann die Anzahl der Wiederholungen derart sein, dass im Wesentlichen sämtliche Löcher mit jeweils einem Quantenpunkt "befüllt sind". Die Wiederholung des Schritts S5 führt daher zu einer optimierten "Bestückung" der jeweiligen Löcher.

Bevorzugt kann das Wafermaterial vorstrukturiert sein.

Zwar führt selbst die einmalige Durchführung und insbesondere die mehrmalige Durchführung des Schritts S5 dazu, dass Quantenpunkte auch an ungewollten Positionen des Wafers oder einer jeweiligen Einzelphotonenquelle abgeschieden werden, jedoch lassen sich die überschüssigen Quantenpunkte vorteilhaft sehr effizient entfernen, da sie nicht in den Löchern angeordnet sein, beispielsweise mittels einer Schutzschicht, die nach dem Schritt S5 oder der wiederholten Durchführung des Schritts S5 entfernt wird. Hier kann insbesondere PMMA (Polymethylmethacrylat) genutzt werden. Das heißt, dass optional vor dem Schritt S5, bevorzugt auch vor dem Schritt S4 eine PMMA Schicht aufgebracht wird, die nach dem Schritt S5, also im Schritt S6 entfernt wird. Die PMMA Schicht kann dabei insbesondere als Lochmaske und/oder Lackmaske fungieren.

Sämtliche im Hinblick auf die verschiedenen Aspekte erläuterten Merkmale sind einzeln oder in (Sub-)Kombination mit anderen Aspekten kombinierbar.

Die Offenbarung sowie weitere vorteilhafte Ausführungsformen und Weiterbildungen derselben werden im Folgenden anhand der in den Zeichnungen dargestellten Beispiele näher beschrieben und erläutert. Es zeigen:
- Fig. 1 eine vereinfachte schematische Darstellung einer Draufsicht auf eine Einzelphotonenquelle,
- Fig. 2 eine vereinfachte schematische Schnittansicht einer Einzelphotonenquelle entlang der Schnittlinie aus Fig. 1,
- Fig. 3 eine vereinfachte schematische Darstellung eines Wafers, und
- Fig. 4 eine vereinfachte schematische Darstellung eines Verfahrens zur Herstellung einer Einzelphotonenquelle.

Alle nachstehend in Bezug auf die Ausführungsbeispiele und/oder die begleitenden Figuren offengelegten Merkmale können allein oder in einer beliebigen Unterkombination mit Merkmalen der Aspekte der vorliegenden Offenbarung, einschließlich Merkmalen bevorzugter Ausführungsformen, kombiniert werden, vorausgesetzt, die sich ergebende Merkmalskombination ist für einen Fachmann auf dem Gebiet der Technik sinnvoll.

Für die Zwecke der vorliegenden Offenbarung bedeutet die Formulierung "mindestens eines von A, B und C" beispielsweise (A), (B), (C), (A und B), (A und C), (B und C) oder (A, B und C), einschließlich aller weiteren möglichen Kombinationen, wenn mehr als drei Elemente aufgeführt sind. Mit anderen Worten, der Begriff "mindestens eines von A und B" bedeutet im Allgemeinen "A und/oder B", nämlich "A" allein, "B" allein oder "A und B".

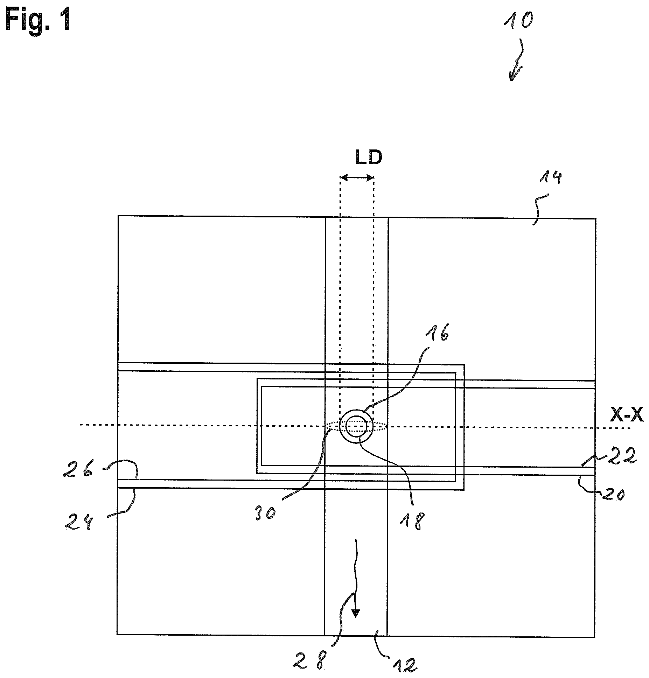

Figur 1 zeigt eine vereinfachte schematische Darstellung einer Draufsicht auf eine Einzelphotonenquelle 10.

Ein Wellenleiterabschnitt 12 ist auf einem Trägersubstrat 14 ausgebildet und eingerichtet, um eine Ausbreitung von elektromagnetischen Wellen entlang seiner Längserstreckungsrichtung zu ermöglichen.

Der Wellenleiterabschnitt 12 weist ein Loch 16 auf, das in ihn hinein geätzt wurde. Im Loch 16 ist ein Quantenpunkt 18 angeordnet.

Auf dem Trägersubstrat 14 ist zudem eine erste Elektrode 20 bereitgestellt, die mit einer Elektroneninjektionsschicht 22 zusammenwirkt. Die Elektroneninjektionsschicht 22 kann deshalb als zur ersten Elektrode 20 zugehörig angesehen werden. Die erste Elektrode 20 ist unterhalb des Wellenleiterabschnitts 12 und des Quantenpunkts 18 angeordnet.

Auf dem Trägersubstrat 14 ist zusätzlich eine zweite Elektrode 24 bereitgestellt, die mit einer Lochinjektionsschicht 26 zusammenwirkt. Die Lochinjektionsschicht 26 kann deshalb als zur zweiten Elektrode 24 zugehörig angesehen werden. Die zweite Elektrode 24 ist oberhalb des Wellenleiterabschnitts 12 und des Quantenpunkts 18 angeordnet.

Die erste Elektrode 20 und die zweite Elektrode 24 sind deshalb bezüglich des Quantenpunkts 18 auf gegenüberliegenden Seiten bzw. in gegenüberliegenden Richtungen angeordnet.

Die erste Elektrode 20, die Elektroneninjektionsschicht 22, die zweite Elektrode 24 und die Lochinjektionsschicht 26 sind gemäß dieser Ausführungsform senkrecht zur Längserstreckungsrichtung des Wellenleiterabschnitts 12 ausgebildet. Sie überragen den Wellenleiterabschnitt 12 deshalb zumindest teilweise entlang seiner Quererstreckungsrichtung.

Die Position des Lochs 16 ist derart ausgebildet, dass der darin angeordnete Quantenpunkt 18 bezüglich seiner Position entlang der Quererstreckungsrichtung des Wellenleiterabschnitts 12 im Wesentlichen mit einem Maximum zumindest einer Wellenleitermode 30 übereinstimmt bzw. zusammenfällt. Dadurch wird die Kopplung zwischen den von dem Quantenpunkt 18 emittierten Einzelphotonen 28 und dem Wellenleiterabschnitt 12 bezüglich der Ausbreitung der elektromagnetischen Wellen optimiert. Die Emission der Einzelphotonen 28 beruht dabei auf der bedarfsgerechten Anregung mittels elektrischer Felder durch die erste Elektrode 20 und die zweite Elektrode 24. Diese können durch externe Zuleitungen entsprechend derart gesteuert werden, dass die Elektroneninjektionsschicht 22 und die Lochinjektionsschicht 26 ein optimiertes Emissionsverhalten des Quantenpunkts ermöglichen.

Der Lochdurchmesser LD ist derart gewählt, dass die Kopplung optimiert ist. Hier beträgt der Lochdurchmesser LD zwischen 20 nm und 40 nm.

Das Trägersubstrat 14 wirkt hier als Chip, auf dem die Einzelphotonenquelle 10 ausgebildet ist. Optional kann das Trägersubstrat 14 in lateraler Richtung ausgedehnt sein. Dann können mehrere Einzelphotonenquellen 10 auf einem gemeinsamen Trägersubstrat 14 ausgebildet sein, also auf einem gemeinsamen Chip.

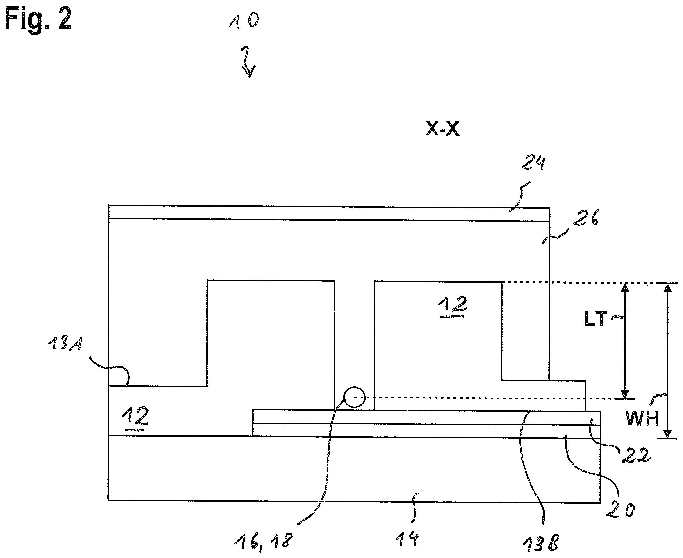

Figur 2 zeigt eine vereinfachte schematische Schnittansicht einer Einzelphotonenquelle 10 entlang der Schnittlinie X-X aus Figur 1. Die Schnittlinie verläuft entlang der Quererstreckungsrichtung des Wellenleiterabschnitts 12. Deutlich zu erkennen ist, dass die erste Elektrode 20 und die zweite Elektrode 24 auf gegenüberliegenden Seiten des Quantenpunkts 18 angeordnet sind.

Natürlich können die Elektroden 20, 24 im Allgemeinen auch bezüglich ihrer Position vertauscht sein. Dann würden auch die Elektroneninjektionsschicht 22 und die Lochinjektionsschicht 26 vertauscht sein. Ebenso ist denkbar, dass die Elektroden 20, 24 nicht ober- und unterhalb des Quantenpunkts 18 angeordnet sind, sondern seitlich davon.

Die Schnittansicht verdeutlicht zudem die Positionierung des Quantenpunkts 18 innerhalb des Lochs 16. Die Wellenleiterhöhe WH wird vom Trägersubstrat aus gemessen und beträgt vorliegend 100 nm. Lediglich der Vollständigkeit halber sei erwähnt, dass die Schnittansicht durch die erste Elektrode 20 verläuft, weshalb die Wellenleiterhöhe WH im Bereich der ersten Elektrode 20 reduziert ist. Im Allgemeinen erstreckt sich die Wellenleiterhöhe WH aber über die erste Elektrode 20 und die Elektroneninjektionsschicht 22 hinweg. Der Quantenpunkt 18 ist entsprechend einer Lochtiefe LT innerhalb des Lochs 16 positioniert. Die Lochtiefe LT wird dabei ausgehend von der dem Trägersubstrat 14 gegenüberliegenden Seite des Wellenleiterabschnitts 12 bestimmt. In dieser Ausführungsform beträgt die Lochtiefe LT zwischen 90 nm und 100 nm für eine Wellenleiterhöhe WH von 100 nm. Das bedeutet, dass der Quantenpunkt 18 im Wesentlichen am dem Trägersubstrat 14 zugewandten Ende des Lochs 16 angeordnet ist.

Zu erkennen ist auch, dass das Loch 16 durch die Abfolge der Herstellungsschritte mit dem Material der Lochinjektionsschicht 26 ausgefüllt wird.

Es ist auch zu sehen, dass der Wellenleiterabschnitt 12 nicht ganz durchgeätzt ist, also eine sogenannte Rippe mit einem ersten Rippenabschnitt 13A und einem zweiten Rippenabschnitt 13B verbleibt. Die Höhe der Rippenabschnitte 13A, 13B beträgt vorzugsweise zwischen 10 nm und 40 nm. Die Rippenabschnitte 13A, 13B verhindern einen Kontakt zwischen der Elektroneninjektionsschicht 22 und der Lochinjektionsschicht 26. So werden Kurzschlüsse zwischen den Elektroden 20, 24 vermieden.

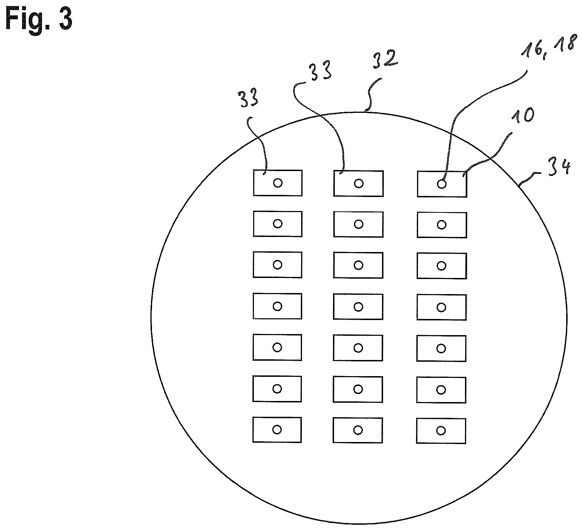

Figur 3 zeigt eine vereinfachte schematische Darstellung eines Wafers 32. Die Einzelphotonenquelle 10 ist in ihrem Aufbau derart, dass eine Vielzahl davon auf dem Wafer 32 angeordnet werden können.

Vorliegend sind jeweils einzelne Einzelphotonenquellen 10 auf dem jeweiligen Chip 33 illustriert. Optional kann das Trägersubstrat 14 eines Chips 33 auch mehrere Einzelphotonenquellen 10 umfassen. Dann weist der Wafer 32 mehrere Chips 33 mit jeweils mehreren Einzelphotonenquellen 10 auf. Bevorzugt kann sich das Trägersubstrat 14 der Chips 33 auch einheitlich über den gesamten Wafer 32 hinweg erstrecken. Das öffnet die Tür zu einer Massenproduktion (großtechnische Herstellungsverfahren) und zu wirtschaftlich tragbaren Anwendungsfällen der Einzelphotonenquelle 10.

Während des Herstellungsverfahrens kann eine Lochmaske 34 verwendet werden, die Löcher entsprechend der Löcher 16 der jeweiligen Einzelphotonenquellen 10 umfasst. Somit können mittels der Lochmaske 34 Quantenpunkte 18 in die Löcher 16 abgeschieden werden. Vorteilhaft kann die Lochmaske 34 dabei relativ zum Wafer 32 ausgerichtet werden, wodurch die Positionierung vereinfacht wird.

Alternativ oder kumulativ kann die Lochmaske 34 auch als Lackmaske fungieren.

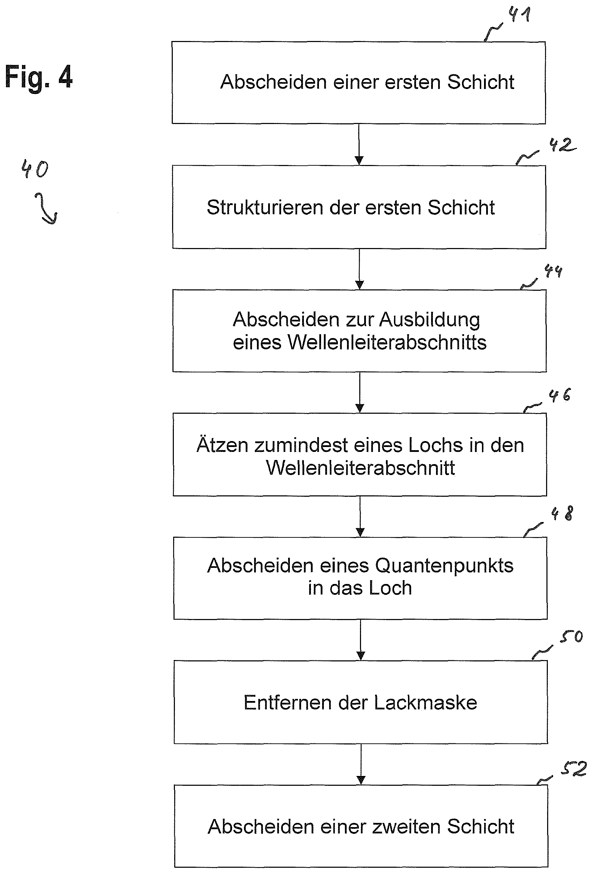

Figur 4 zeigt eine vereinfachte schematische Darstellung eines Verfahrens 40 zur Herstellung einer Einzelphotonenquelle 10.

Das Verfahren 40 umfasst zumindest den Schritt 41 des Abscheidens eines ersten Materials zur Ausbildung einer ersten Schicht auf einem Trägersubstrat 14.

Das Verfahren 40 umfasst ferner den Schritt 42 des Strukturierens der ersten Schicht auf dem Trägersubstrat 14.

Im anschließenden Schritt 44 wird ein zweites Material zur Ausbildung eines Wellenleiterabschnitts 12 zumindest teilweise auf der ersten Schicht abgeschieden.

Der Schritt 46 umfasst das Ätzen zumindest eines Lochs 16 in den Wellenleiterabschnitt 12 unter Verwendung einer Lochmaske 34.

Im Schritt 48 wird zumindest ein Quantenpunkt 18 aus einer Lösung unter Verwendung einer Lackmaske in das Loch 16 des Wellenleiterabschnitts 12 abgeschieden. Dabei ist die Lackmaske bezüglich des Wellenleiterabschnitts 12 derart angeordnet, dass zumindest ein Loch in der Lackmaske mit dem Loch 16 in dem Wellenleiterabschnitt 12 übereinstimmt

Anschließend wird die Lackmaske in Schritt 50 entfernt.

Im Schritt 52 wird zumindest ein drittes Material zur Ausbildung einer zweiten Schicht zumindest teilweise auf dem Wellenleiterabschnitt 12 abgeschieden. Optional kann der Schritt 52 das Strukturieren der zweiten Schicht auf dem Wellenleiterabschnitt 12 umfassen.

Die erste Schicht ist als erste Elektrode 20 und die zweite Schicht als zweite Elektrode 24 zur Kontaktierung des Quantenpunkts 18 eingerichtet. Die erste Elektrode 20 und/oder die zweite Elektrode 24 kann/können jeweils strukturiert sein, um gewünschte Abmessungen aufzuweisen. Die Strukturierung kann mittels Lithographie und eines geeigneten Ätzprozesses erfolgen.

Bevorzugt umfasst die erste Elektrode 20 zumindest ein erstes Material derart, dass sie als Elektroneninjektionsschicht eingerichtet ist. Alternativ kann die erste Elektrode 20 eine Elektroneninjektionsschicht umfassen, die Elektroneninjektionsschicht kann also als zur ersten Elektrode 20 zugehörig angesehen werden.

Alternativ oder kumulativ umfasst die zweite Elektrode 24 zumindest ein drittes Material derart, dass sie als Lochinjektionsschicht eingerichtet ist. Alternativ kann die zweite Elektrode 24 eine Lochinjektionsschicht umfassen die Lochinjektionsschicht kann also als zur zweiten Elektrode 24 zugehörig angesehen werden.

Optional kann der Schritt 48 wiederholt vorgenommen werden, beispielsweise um eine höhere Bestückung von Quantenpunkten 18 in jeweilige Löcher 16 von Einzelphotonenquellen 10 zu gewährleisten. Die Wiederholung des Schritts 48 erhöht die Wahrscheinlichkeit, ein bestimmtes Loch 16 mit einem Quantenpunkt 18 zu befüllen.

In der vorliegenden Anmeldung kann auf Mengen und Zahlen Bezug genommen werden. Sofern nicht ausdrücklich angegeben, sind solche Mengen und Zahlen nicht als einschränkend zu betrachten, sondern als Beispiele für die möglichen Mengen oder Zahlen im Zusammenhang mit der vorliegenden Anmeldung. In diesem Zusammenhang kann in der vorliegenden Anmeldung auch der Begriff "Mehrzahl" verwendet werden, um auf eine Menge oder Zahl zu verweisen. In diesem Zusammenhang ist mit dem Begriff "Mehrzahl" jede Zahl gemeint, die größer als eins ist, z. B. zwei, drei, vier, fünf, usw. Die Begriffe "etwa", "ungefähr", "nahe" usw. bedeuten plus oder minus 5 % des angegebenen Wertes.

Obwohl die Offenbarung in Bezug auf eine oder mehrere Ausführungsformen dargestellt und beschrieben wurde, wird der Fachmann nach dem Lesen und Verstehen dieser Beschreibung und der beigefügten Zeichnungen gleichwertige Änderungen und Modifikationen vornehmen können.

Das Projekt, welches zu dieser Anmeldung geführt hat, wurde von der Europäischen Union im Rahmen des Forschungs- und Innovationsprogramms Horizon 2020 unter der Finanzhilfevereinbarung Nr. 861950, Projekt POSEIDON, gefördert.

## Patentansprüche

1. Einzelphotonenquelle (10) umfassend zumindest einen Wellenleiterabschnitt (12), einen aus einer Lösung abgeschiedenen Quantenpunkt (18), eine erste Elektrode (20) und eine zweite Elektrode (24), wobei der Wellenleiterabschnitt (12) ein Loch (16) aufweist, in dem der Quantenpunkt (18) innerhalb des Wellenleiterabschnitts (12) integriert ist,
wobei
die erste Elektrode (20) und die zweite Elektrode (24) auf gegenüberliegenden Seiten des Quantenpunkts (18) angeordnet sind und eingerichtet sind, diesen elektrisch zu kontaktieren.

2. Einzelphotonenquelle (10) nach Anspruch 1 **dadurch gekennzeichnet, dass** die erste Elektrode (20) zumindest ein erstes Material derart umfasst, dass sie als Elektroneninjektionsschicht (22) eingerichtet ist, dass der Wellenleiterabschnitt (12) ein zweites Material umfasst, und dass die zweite Elektrode (24) zumindest ein drittes Material derart umfasst, dass sie als Lochinjektionsschicht (26) eingerichtet ist.

3. Einzelphotonenquelle (10) nach Anspruch 1 oder 2 **dadurch gekennzeichnet, dass** das Loch (16) innerhalb des Wellenleiterabschnitts (12) derart angeordnet ist, dass es im Wesentlichen mit einem Maximum zumindest einer elektromagnetischen Schwingungsmode (30) innerhalb des Wellenleiterabschnitts (12) übereinstimmt.

4. Einzelphotonenquelle (10) nach einem der vorherigen Ansprüche **dadurch gekennzeichnet, dass** das erste Material TiO₂, ZnO oder TPBi umfasst und dass das dritte Material NiO oder PTAA umfasst.

5. Einzelphotonenquelle nach einem der vorherigen Ansprüche **dadurch gekennzeichnet, dass** der Wellenleiterabschnitt (12) SiN, Ta₂O₅, TiO₂, AlN oder ein abweichendes dielektrisches zweites Material umfasst.

6. Einzelphotonenquelle (10) nach einem der vorherigen Ansprüche **dadurch gekennzeichnet, dass** der Quantenpunkt (18) einen CdSeTe Kern mit einer ZnS Hülle umfasst.

7. Einzelphotonenquelle (10) nach einem der vorherigen Ansprüche **dadurch gekennzeichnet, dass** ein Radius des Lochs (16) größer oder gleich 5 nm und kleiner oder gleich 75 nm beträgt, bevorzugt größer oder gleich 7 nm und kleiner oder gleich 30 nm, besonders bevorzugt größer oder gleich 10 nm und kleiner oder gleich 20 nm.

8. Einzelphotonenquelle (10) nach einem der vorherigen Ansprüche **dadurch gekennzeichnet, dass** der Wellenleiterabschnitt (12), die erste Elektrode (20) und die zweite Elektrode (24) auf einem Trägersubstrat (14) angeordnet sind, wobei der Wellenleiterabschnitt (12) eine Höhe (WH) vom Trägersubstrat (14) ausgehend aufweist, und wobei eine Lochtiefe (LT) des Lochs (16) ausgehend von einer Oberseite des Wellenleiterabschnitts (12) zumindest 50% der Höhe des Wellenleiterabschnitts (12) beträgt, bevorzugt zumindest 70%, weiter bevorzugt zumindest 85%, weiter bevorzugt zumindest 90% und bis zu 100%.

9. Wafer (32) aufweisend eine Mehrzahl von Einzelphotonenquellen (10) nach einem der vorherigen Ansprüche.

10. Verfahren (40) zur Herstellung einer Einzelphotonenquelle (10), das Verfahren (40) zumindest umfassend:
| | |
|---|---|
| S1 | Abscheiden eines ersten Materials zur Ausbildung einer ersten Schicht auf einem Trägersubstrat (14), |
| S2 | Strukturieren der ersten Schicht auf dem Trägersubstrat (14), |
| S3 | Abscheiden eines zweiten Materials zur Ausbildung eines Wellenleiterabschnitts (12) zumindest teilweise auf der ersten Schicht, |
| S4 | Ätzen zumindest eines Lochs (16) in den Wellenleiterabschnitt (12) unter Verwendung einer Lochmaske (34), |
| S5 | Abscheiden zumindest eines Quantenpunkts (18) aus einer Lösung unter Verwendung einer Lackmaske in das Loch (16) des Wellenleiterabschnitts (12), wobei die Lackmaske bezüglich des Wellenleiterabschnitts (12) derart angeordnet ist, dass zumindest ein Loch in der Lackmaske mit dem Loch (16) in dem Wellenleiterabschnitt (12) übereinstimmt, |
| S6 | Entfernen der Lackmaske, und |
| S7 | Abscheiden zumindest eines dritten Materials zur Ausbildung einer zweiten Schicht zumindest teilweise auf dem Wellenleiterabschnitt (12), |
wobei die erste Schicht als erste Elektrode (20) und die zweite Schicht als zweite Elektrode (24) zur Kontaktierung des Quantenpunkts (18) eingerichtet ist.

11. Verfahren nach Anspruch 10 **dadurch gekennzeichnet, dass** in Schritt S3 ein Sputterprozess, chemische Gasphasenabscheidung, physikalische Gasphasenabscheidung, plasmaunterstützte chemische Gasphasenabscheidung oder Atomlagenabscheidung verwendet wird.

12. Verfahren nach Anspruch 10 oder 11 **dadurch gekennzeichnet, dass** eine Vielzahl an integrierten Einzelphotonenquellen (10) auf einem Wafermaterial in separaten Einheiten ausgebildet werden, wobei Abmessungen der Lackmaske in Schritt S5 im Wesentlichen mit Abmessungen des Wafers (32) übereinstimmen, und wobei Schritt S5 mehrfach wiederholt wird.

## Claims

1. Single-photon source (10) comprising at least one waveguide portion (12), a quantum dot (18) deposited from a solution, a first electrode (20), and a second electrode (24), wherein the waveguide portion (12) has a hole (16) in which the quantum dot (18) is integrated within the waveguide portion (12), wherein the first electrode (20) and the second electrode (24) are arranged on opposite sides of the quantum dot (18) and are configured to electrically contact the quantum dot (18).

2. Single-photon source (10) according to claim 1,
**characterized in that** the first electrode (20) comprises at least a first material such that said electrode is configured as an electron injection layer (22), **in that** the waveguide portion (12) comprises a second material, and **in that** the second electrode (24) comprises at least a third material such that said electrode is configured as a hole injection layer (26).

3. Single-photon source (10) according to claim 1 or 2,
**characterized in that** the hole (16) within the waveguide portion (12) is arranged such that it substantially coincides with a maximum of at least one electromagnetic oscillation mode (30) within the waveguide portion (12).

4. Single-photon source (10) according to any of the preceding claims,
**characterized in that** the first material comprises TiO₂, ZnO or TPBi, and **in that** the third material comprises NiO or PTAA.

5. Single-photon source according to any of the preceding claims,
**characterized in that** the waveguide portion (12) comprises SiN, Ta₂O₅, TiO₂, AlN or a different dielectric second material.

6. Single-photon source (10) according to any of the preceding claims,
**characterized in that** the quantum dot (18) comprises a CdSeTe core with a ZnS shell.

7. Single-photon source (10) according to any of the preceding claims,
**characterized in that** a radius of the hole (16) is greater than or equal to 5 nm and less than or equal to 75 nm, preferably greater than or equal to 7 nm and less than or equal to 30 nm, particularly preferably greater than or equal to 10 nm and less than or equal to 20 nm.

8. Single-photon source (10) according to any of the preceding claims,
**characterized in that** the waveguide portion (12), the first electrode (20) and the second electrode (24) are arranged on a carrier substrate (14), wherein the waveguide portion (12) has a height (WH), starting from the carrier substrate (14), and wherein a hole depth (LT) of the hole (16), starting from a top surface of the waveguide portion (12), is at least 50% of the height of the waveguide portion (12), preferably at least 70%, more preferably at least 85%, more preferably at least 90% and up to 100%.

9. Wafer (32) comprising a plurality of single-photon sources (10) according to any of the preceding claims.

10. Method (40) for producing a single-photon source (10), the method (40) at least comprising:
S1 depositing a first material to form a first layer on a carrier substrate (14),
S2 structuring the first layer on the carrier substrate (14),
S3 depositing a second material to form a waveguide portion (12) at least partially on the first layer,
S4 etching at least one hole (16) into the waveguide portion (12) using a hole mask (34),
S5 depositing at least one quantum dot (18) from a solution into the hole (16) of the waveguide portion (12) using a lacquer mask, wherein the lacquer mask is arranged with respect to the waveguide portion (12) such that at least one hole in the lacquer mask coincides with the hole (16) in the waveguide portion (12),
S6 removing the lacquer mask, and
S7 depositing at least a third material to form a second layer at least partially on the waveguide portion (12),
wherein the first layer is configured as the first electrode (20) and the second layer as the second electrode (24) for contacting the quantum dot (18).

11. Method according to claim 10, **characterized in that** in step S3, a sputtering process, chemical vapor deposition, physical vapor deposition, plasma-enhanced chemical vapor deposition or atomic layer deposition is used.

12. Method according to claim 10 or 11, **characterized in that** a plurality of integrated single-photon sources (10) are formed on a wafer material in separate units, wherein dimensions of the lacquer mask in step S5 substantially correspond to dimensions of the wafer (32), and wherein step S5 is repeated multiple times.

## Revendications

1. Source de photons uniques (10) comprenant au moins une section formant guide d'ondes (12), une boîte quantique (18) déposée à partir d'une solution, une première électrode (20) et une seconde électrode (24), dans laquelle la section formant guide d'ondes (12) présente un trou (16) dans lequel la boîte quantique (18) est intégrée à l'intérieur de la section formant guide d'ondes (12),
dans laquelle la première électrode (20) et la
seconde électrode (24) sont disposées sur des côtés opposés de la boîte quantique (18) et sont configurées pour établir un contact électrique avec celle-ci.

2. Source de photons uniques (10) selon la revendication 1,
**caractérisée en ce que** la première électrode (20) comprend au moins un premier matériau de telle sorte qu'elle est conçue en tant que couche d'injection d'électrons (22), **en ce que** la section formant guide d'ondes (12) comprend un deuxième matériau, **et en ce que** la seconde électrode (24) comprend au moins un troisième matériau de telle sorte qu'elle est conçue en tant que couche d'injection de trous (26).

3. Source de photons uniques (10) selon la revendication 1 ou 2,
**caractérisée en ce que** le trou (16) est disposé à l'intérieur de la section formant guide d'ondes (12) de telle sorte qu'il coïncide sensiblement avec un maximum d'au moins un mode d'oscillation électromagnétique (30) à l'intérieur de la section formant guide d'ondes (12).

4. Source de photons uniques (10) selon l'une des revendications précédentes, **caractérisée en ce que** le premier matériau comprend TiO₂, ZnO ou TPBi, **et en ce que** le troisième matériau comprend NiO ou PTAA.

5. Source de photons uniques selon l'une des revendications précédentes,
**caractérisée en ce que** la section formant guide d'ondes (12)
comprend SiN, Ta₂O₅, TiO₂, AlN ou un second matériau diélectrique différent.

6. Source de photons uniques (10) selon l'une des revendications précédentes, **caractérisée en ce que** la boîte quantique (18) comprend un noyau en CdSeTe comportant une enveloppe en ZnS.

7. Source de photons uniques (10) selon l'une des revendications précédentes, **caractérisée en ce qu'**un rayon du trou (16) est supérieur ou égal à 5 nm et inférieur ou égal à 75 nm, de préférence supérieur ou égal à 7 nm et inférieur ou égal à 30 nm, de manière particulièrement préférée supérieur ou égal à 10 nm et inférieur ou égal à 20 nm.

8. Source de photons uniques (10) selon l'une des revendications précédentes, **caractérisée en ce que** la section formant guide d'ondes (12), la première électrode (20) et la seconde électrode (24) sont disposées sur un substrat de support (14), dans laquelle la section formant guide d'ondes (12) présente une hauteur (WH) à partir du substrat de support (14), et dans laquelle une profondeur de trou (LT) du trou (16) à partir d'une face supérieure de la section formant guide d'ondes (12) est d'au moins 50 % de la hauteur de la section formant guide d'ondes (12), de préférence d'au moins 70 %, plus préférablement d'au moins 85 %, plus préférablement d'au moins 90 % et jusqu'à 100 %.

9. Tranche (32) présentant une pluralité de sources de photons uniques (10) selon l'une des revendications précédentes.

10. Procédé (40) pour la fabrication d'une source de photons uniques (10), le procédé (40) comprenant au moins :
S1 le dépôt d'un premier matériau pour former une première couche sur un substrat de support (14),
S2 la structuration de la première couche sur le substrat de support (14),
S3 le dépôt d'un deuxième matériau pour former une section formant guide d'ondes (12) au moins partiellement sur la première couche,
S4 la gravure d'au moins un trou (16) dans la section formant guide d'ondes (12) à l'aide d'un masque à trous (34),
S5 le dépôt d'au moins une boîte quantique (18) à partir d'une solution, à l'aide d'un masque de résine, dans le trou (16) de la section formant guide d'ondes (12), dans lequel le masque de résine est disposé par rapport à la section formant guide d'ondes (12) de telle sorte qu'au moins un trou dans le masque de résine coïncide avec le trou (16) dans la section formant guide d'ondes (12),
S6 le retrait du masque de résine, et
S7 le dépôt d'au moins un troisième matériau pour former une seconde couche au moins partiellement sur la section formant guide d'ondes (12),
dans lequel la première couche est conçue en tant que première électrode (20) et la seconde couche est conçue en tant que seconde électrode (24) pour la mise en contact avec la boîte quantique (18).

11. Procédé selon la revendication 10, **caractérisé en ce que**, à l'étape S3, un processus de pulvérisation, un dépôt chimique en phase vapeur, un dépôt physique en phase vapeur, un dépôt chimique en phase vapeur assisté par plasma ou un dépôt par couche atomique est utilisé.

12. Procédé selon la revendication 10 ou 11, **caractérisé en ce qu'**une pluralité de sources de photons uniques (10) intégrées sont réalisées sur un matériau de tranche en unités distinctes, dans lequel des dimensions du masque de résine à l'étape S5 coïncident sensiblement avec des dimensions de la tranche (32), et dans lequel l'étape S5 est répétée plusieurs fois.
